# EUROPEAN PATENT APPLICATION

(11) **EP 3 904 243 A1**
(43) Date of publication of application: **03.11.2021**
(21) Application number: 19906101.1
(22) Date of filing: 19.12.2019
(51) Int. Cl.: B65G 33/14, B65G 33/26, E21D 9/12

(54) **SCREW CONVEYOR AUGER ASSEMBLY METHOD**

(30) Priority: 27.12.2018 JP 2018245156
(71) Applicant: Kawasaki Jukogyo Kabushiki Kaisha, Hyogo 650-8670 (JP)
(72) Inventor: ODA, Makoto, 650-8670 Hyogo (JP); ITO, Takao, 650-8670 Hyogo (JP)
(74) Representative: Witte, Weller & Partner Patentanwälte mbB
(86) International application number: PCT/JP2019/049830
(87) International publication number: WO 2020/137801

(57) **Abstract**

A method of assembling an auger of a screw conveyor includes: at a preliminary assembly site, arranging first and second segments of the auger such that the first and second segments form a continuous spiral, aligning centers of the first and second segments using outer circumferential surfaces of circling portions of the first and second segments as a reference, and welding a plurality of supports to the circling portions of the first and second segments with the centers aligned; dividing each of the supports welded to the circling portions of the first and second segments into first and second halves; and at a final assembly site, fastening the first and second halves of each support and welding the first and second segments with the first and second halves fastened.

## Description

### Technical Field

The present invention relates to a method of assembling an auger of a screw conveyor.

### Background Art

Screw conveyors include shaft-type screw conveyors having a linear central shaft around which a spiral auger is provided and ribbon-type screw conveyors having no central shaft (see Patent Literature 1, for example). Ribbon-type screw conveyors have the advantage of being able to convey larger pieces of material (such as gravel) than shaft-type screw conveyors.

### Citation List

### Patent Literature

PTL 1: Japanese Laid-Open Patent Application Publication No. 2011-69157

### Summary of Invention

### Technical Problem

However, a ribbon-type screw conveyor, as viewed in its axial direction, has a through hole in the center of its auger. As such, the problem of low water stop performance arises when the material to be conveyed contains a large amount of water.

In this context, the applicant of the present application proposed a screw conveyor including a special form of auger in a patent application (Japanese Patent Application No. 2017-137814) filed prior to the present application. This auger is configured such that a plurality of circling portions are arranged in the axial direction of the auger and that the blade surfaces of adjacent ones of the circling portions face each other and form a semicircular curve in a cross-section containing the centerline of the auger. The screw conveyor including such a form of auger, as viewed in the axial direction, does not have any through hole in the center of the auger. Thus, this screw conveyor can exhibit improved water stop performance.

The above auger does not have any central shaft. As such, when the auger is divided into a plurality of segments and, at the site where the auger is used (e.g., a construction site), the segments are welded to assemble the auger, it is difficult to align the centers of the segments, namely to ensure the straightness of the centerline of the auger.

It is therefore an object of the present invention to provide a method of assembling an auger, the method being capable of ensuring the straightness of the centerline of the auger when segments of the auger are welded together.

### Solution to Problem

To solve the problem described above, the present invention provides a method of assembling an auger of a screw conveyor, the auger being configured such that a plurality of circling portions are arranged in an axial direction of the auger and that blade surfaces of adjacent ones of the circling portions face each other and form a semicircular curve in a cross-section containing a centerline of the auger, the auger including a first segment and a second segment, each of the first and second segments including at least one of the circling portions, the method including: at a preliminary assembly site, arranging the first and second segments such that the first and second segments form a continuous spiral, aligning centers of the first and second segments using outer circumferential surfaces of the circling portions of the first and second segments as a reference, disposing a plurality of supports between the circling portions of the first and second segments with the centers aligned, and welding the plurality of supports to the circling portions of the first and second segments, each support extending in the axial direction of the auger and being made up of a first half and a second half fastened by bolts; removing the bolt to divide each of the supports welded to the circling portions of the first and second segments into the first and second halves; and at a final assembly site, fastening the first and second halves of each support by the bolts and welding the first and second segments with the first and second halves fastened by the bolts.

The term "circling portion" as used herein refers to a constituting element extending helically over 360 degrees about the centerline of the auger.

With the above configuration, that positional relationship between the first and second segments which was accurately adjusted at the preliminary assembly site can be established also at the final assembly site. Thus, the straightness of the centerline of the auger can be ensured when the first and second segments are welded.

At the preliminary assembly site, the first and second segments may be disposed into a tubular casing that encloses the auger. With this configuration, the first and second segments can be supported using the casing at the preliminary assembly site.

In aligning the centers of the first and second segments, a distance from an inner circumferential surface of the casing to the outer circumferential surface of the circling portion of the first segment and a distance from the inner circumferential surface of the casing to the outer circumferential surface of the circling portion of the second segment may be made equal. With this configuration, there is no need to use any specialized positioning frame for aligning the centers of the first and second segments. Thus, the assembly cost of the auger can be reduced.

The casing may include a maintenance cover constituting a part of the casing, and in arranging the first and second segments at the preliminary assembly site, the maintenance cover of the casing may be removed to form an opening in the casing, and a dividing plane between the first and second segments may be placed inside the opening. With this configuration, the work of aligning the centers of the first and second segments and the subsequent work of welding the supports to the first and second segments can easily be carried out through the opening of the casing.

At the final assembly site, the first and second segments may be disposed into a tubular casing that encloses the auger. With this configuration, the first and second segments can be supported using the casing at the final assembly site.

The casing may include a maintenance cover constituting a part of the casing, and in fastening the first and second halves of each support at the final assembly site, the maintenance cover of the casing may be removed to form an opening in the casing, and a dividing plane between the first and second segments may be placed inside the opening. With this configuration, the work of fastening the first and second halves and the subsequent work of welding the first and second segments can easily be carried out through the opening of the casing.

### Advantageous Effects of Invention

According to the present invention, the straightness of the centerline of an auger can be ensured when segments of the auger are welded together.

### Brief Description of Drawings

FIG. 1 is a side view of a screw conveyor including an auger assembled by an assembly method according to one embodiment of the present invention.
FIG. 2 is a cross-sectional view of the screw conveyor with a part of a casing removed.
FIG. 3 is a cross-sectional view of the auger.
FIG. 4 is a cross-sectional view taken along the line IV-IV of FIG. 2.

### Description of Embodiments

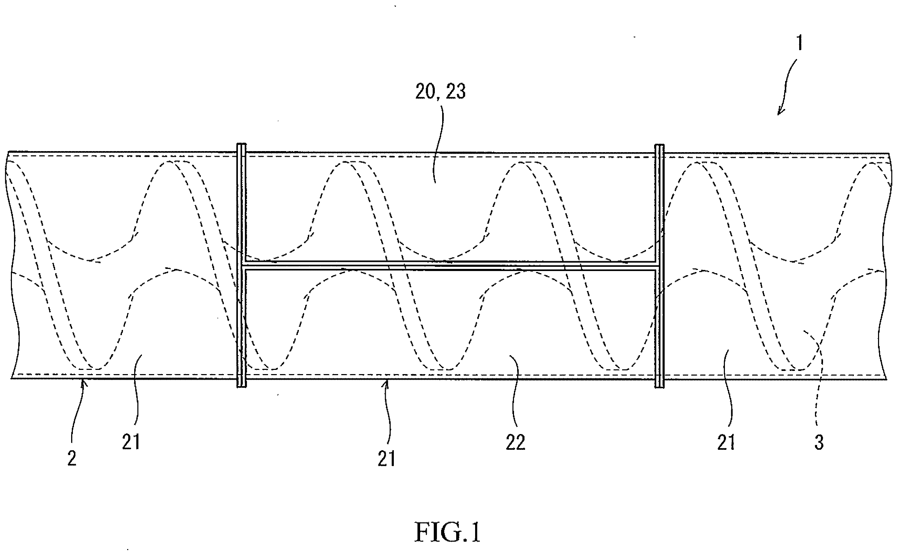

FIG. 1 shows a screw conveyor 1 including an auger 3 assembled by an assembly method according to one embodiment of the present invention. The screw conveyor 1 includes, in addition to the spiral auger 3, a tubular casing 2 enclosing the auger 3.

The casing 2 includes a removable maintenance cover 20 constituting a part of the casing 2. Specifically, the casing 2 is divided into a plurality of pipes 21 arranged in the axial direction of the casing 2. Each pipe 21 is provided with flanges at both ends, and the respective flanges of the adjacent pipes 21 are fastened together by bolts and nuts (not shown). Further, one of the pipes 21 is divided into a lower half 22 and an upper half 23. Each of the lower and upper halves 22 and 23 is provided with flanges at both circumferential ends, and the respective flanges of the halves 22 and 23 are fastened together by bolts and nuts (not shown). In the present embodiment, the upper half 23 serves as the maintenance cover 20. It should be noted that the structure of the maintenance cover 20 can be changed as appropriate.

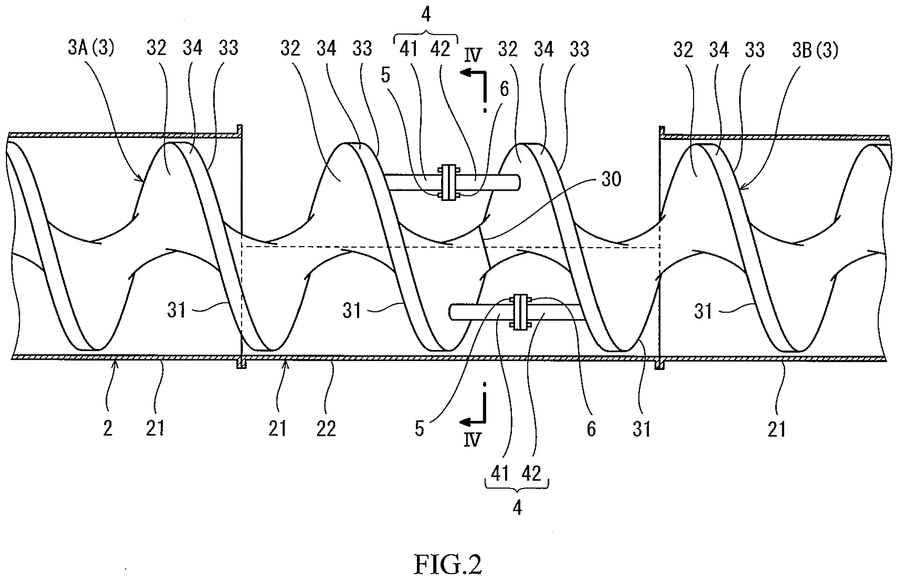

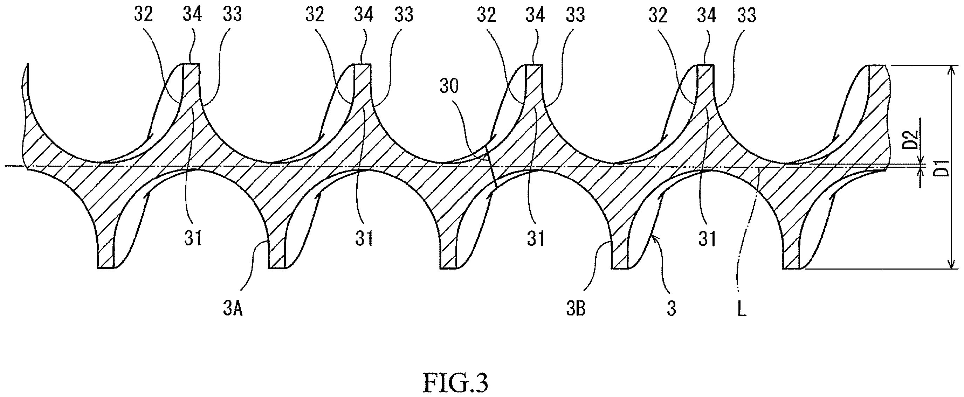

As shown in FIGS. 2 and 3, the auger 3 includes a plurality of circling portions 31 arranged in the axial direction of the auger 3. Each circling portion 31 includes blade surfaces 32 and 33 facing in opposite directions and an outer circumferential surface 34 circular in shape when viewed in the axial direction of the auger 3. Assuming that a material is conveyed from left to right in FIG. 2, the blade surface 33 facing rightward is a conveying surface, and the blade surface 32 facing leftward is a non-conveying surface.

The auger 3 is configured such that the blade surfaces 32 and 33 of adjacent ones of the circling portions 31 face each other and form a semicircular curve in a cross-section containing the centerline L of the auger 3. The semicircular curve does not intersect the centerline L. The minimum distance D2 from the centerline L to the semicircular curve is desirably 1/20 or less of the diameter D1 of the auger 3 and more desirably 1/40 or less of the diameter D1.

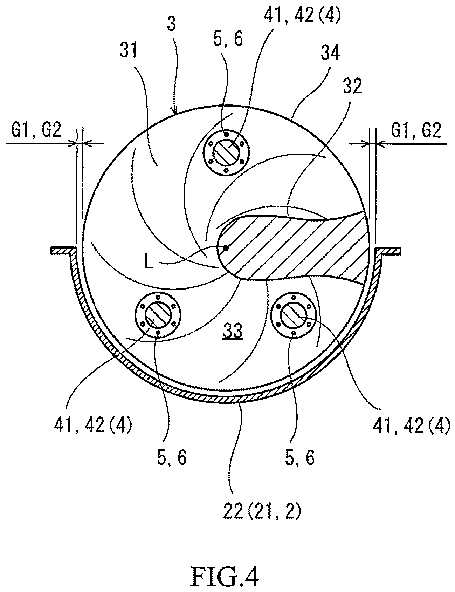

As shown in FIG. 4, the cross-section of the auger 3 taken in a direction perpendicular to the axial direction of the auger 3 is shaped to extend straight outward in the radial direction from the centerline L. The shape of the cross-section of the auger 3 taken in the direction perpendicular to the axial direction of the auger 3 is the same over the entire length of the auger 3 in the axial direction. In other words, the shape of the auger 3 is formed of a spiral arrangement of cross-sections as shown in FIG. 4.

In the present embodiment, as shown in FIGS. 2 and 3, the auger 3 is divided into a first segment 3A and a second segment 3B at a dividing plane 30. Each of the first and second segments 3A and 3B includes at least one of the circling portions 31. It should be noted that the auger 3 may be divided into three or more segments.

For example, each of the first and second segments 3A and 3B is produced by casting. Alternatively, each of the circling portions 31 may be produced by casting individually, and the circling portions 31 may be welded together to produce each of the first and second segments 3A and 3B.

The first and second segments 3A and 3B are welded together. Thus, the auger 3 is assembled. Hereinafter, the method of welding the first and second segments 3A and 3B (the method of assembling the auger 3) will be described in detail.

First, at a preliminary assembly site (e.g., a factory), the first and second segments 3A and 3B are arranged such that they form a continuous spiral. In other words, the weld surfaces of the first and second segments 3A and 3B are placed face-to-face. The weld surfaces of the first and second segments 3A and 3B are surfaces extending along the dividing plane 30 mentioned above, and a gap to be filled with beads during welding is formed between the weld surfaces.

In the present embodiment, as shown in FIG. 2, the first and second segments 3A and 3B are disposed into the casing 2 at the preliminary assembly site. In arranging the first and second segments 3A and 3B, the maintenance cover 20 of the casing 2 is removed to form an opening in the casing 2, and the dividing plane 30 between the first and second segments 3A and 3B is placed inside the opening.

Subsequently, the centers of the first and second segments 3A and 3B are aligned using the outer circumferential surfaces 34 of the circling portions 31 of the first and second segments 3A and 3B as a reference.

In the present embodiment, in aligning the centers of the first and second segments 3A and 3B, a distance G1 from the inner circumferential surface of the casing 2 to the outer circumferential surface 34 of the circling portion 31 of the first segment 3A and a distance G2 from the inner circumferential surface of the casing 2 to the outer circumferential surface 34 of the circling portion 31 of the second segment 3B are made equal at both sides of the auger 3 as shown in FIG. 4. Although in FIG. 4 the gap between the inner circumferential surface of the casing 2 and the auger 3 is shown as being present also below the auger 3, it should be noted that FIG. 4 is an imaginary view for illustrating the casing 2 and auger 3 with their centers aligned and that when the first and second segments 3A and 3B are actually disposed into the casing 2, the first and second segments 3A and 3B are placed on the inner circumferential surface of the casing 2.

After the positional relationship between the first and second segments 3A and 3B is adjusted to align the centers of the first and second segments 3A and 3B, a plurality of supports 4 are disposed (in the present embodiment, three supports 4 are disposed as shown in FIG. 4) between the circling portions 31 of the first and second segments 3 A and 3B with their centers aligned, and the supports 4 are welded to the circling portions 31 of the first and second segments 3A and 3B.

Each support 4 extends in the axial direction of the auger 3. Each support 4 is made up of a first half 41 and a second half 42 fastened by bolts 5 and nuts 6. It should be noted that providing one of the first and second halves 41 and 42 with threaded holes would eliminate the need for the nuts 6.

More specifically, each of the first and second halves 41 and 42 includes a rod and a flange, and the flange is provided with a plurality of holes into which the bolts 5 are inserted.

After the supports 4 are welded to the circling portions 31 of the first and second segments 3A and 3B, the bolts 5 are removed to divide each support 4 into the first and second halves 41 and 42. Subsequently, the first segment 3A with the first halves 41 and the second segment 3B with the second halves are transported from the preliminary assembly site to a final assembly site (e.g., a construction site).

At the final assembly site, the first and second halves 41 and 42 of each support 4 are fastened by the bolts 5 and nuts 6, and the first and second segments 3A and 3B with the first and second halves 41 and 42 fastened are welded. After completion of the welding, all of the supports 4 are removed from the assembled auger 3.

In the present embodiment, as shown in FIG. 2, the first and second segments 3A and 3B are disposed into the casing 2 at the final assembly site. In fastening the first and second halves 41 and 42 of each support 4, the maintenance cover 20 of the casing 2 is removed to form an opening of the casing 2, and the dividing plane 30 between the first and second segments 3A and 3B are placed inside the opening.

With the assembly method as described above, that positional relationship between the first and second segments 3A and 3B which was accurately adjusted at the preliminary assembly site can be established also at the final assembly site. Thus, the straightness of the centerline L of the auger 3 can be ensured when the first and second segments 3A and 3B are welded.

Additionally, in the present embodiment, since in arranging the first and second segments 3A and 3B at the preliminary assembly site, the dividing plane 30 between the first and second segments 3A and 3B is placed inside the opening formed by removal of the maintenance cover 20 of the casing 2, the work of aligning the centers of the first and second segments 3A and 3B and the subsequent work of welding the supports 4 to the first and second segments 3A and 3B can easily be carried out through the opening of the casing 2.

Further, in the present embodiment, since in fastening the first and second halves 41 and 42 of each support 4 at the final assembly site, the dividing plane 30 between the first and second segments 3A and 3B is placed inside the opening formed by removal of the maintenance cover 20 of the casing 2, the work of fastening the first and second halves 41 and 42 and the subsequent work of welding the first and second segments 3A and 3B can easily be carried out through the opening of the casing 2.

### (Modification Example)

The present invention is not limited to the embodiment described above, and various modifications can be made without departing from the gist of the present invention.

For example, the adjustment of the positional relationship between the first and second segments 3A and 3B at the preliminary assembly site need not be performed using the casing 2. For example, a specialized positioning frame placed to extend along both the first and second segments 3A and 3B and adapted to contact with both the outer circumferential surface 34 of the circling portion 31 of the first segment 3A and the outer circumferential surface 34 of the circling portion 31 of the second segment 3B may be used instead of the casing 2.

It should be noted, however, that when the positional relationship between the first and second segments 3A and 3B is adjusted using the casing 2 as in the above embodiment, there is no need to use the above-mentioned specialized positioning frame for aligning the centers of the first and second segments 3A and 3B. Thus, the assembly cost of the auger 3 can be reduced. Additionally, when the first and second segments 3A and 3B are disposed into the casing 2, the first and second segments 3A and 3B can be supported using the casing 2 at the preliminary assembly site.

The welding of the first and second segments 3A and 3B at the final assembly site need not be carried out inside the casing 2. For example, if a launch shaft for a shield machine is sufficiently large, the first and second segments 3A and 3B may be welded inside the launch shaft, and then the assembled auger 3 may be inserted into the casing 2.

It should be noted, however, that when the first and second segments 3A and 3B are disposed into the casing 2 at the final assembly site as in the above embodiment, the first and second segments 3A and 3B can be supported using the casing 2 at the final assembly site.

### Reference Signs List

- 1: screw conveyor
- 2: casing
- 20: maintenance cover
- 3: auger
- 30: dividing plane
- 3A: first segment
- 3B: second segment
- 31: circling portion
- 32, 33: blade surface
- 34: outer circumferential surface
- 4: support
- 41: first half
- 42: second half
- 5: bolt

## Claims

1. A method of assembling an auger of a screw conveyor, the auger being configured such that a plurality of circling portions are arranged in an axial direction of the auger and that blade surfaces of adjacent ones of the circling portions face each other and form a semicircular curve in a cross-section containing a centerline of the auger, the auger including a first segment and a second segment, each of the first and second segments including at least one of the circling portions, the method comprising:
at a preliminary assembly site, arranging the first and second segments such that the first and second segments form a continuous spiral, aligning centers of the first and second segments using outer circumferential surfaces of the circling portions of the first and second segments as a reference, disposing a plurality of supports between the circling portions of the first and second segments with the centers aligned, and welding the plurality of supports to the circling portions of the first and second segments, each support extending in the axial direction of the auger and being made up of a first half and a second half fastened by bolts;
removing the bolts to divide each of the supports welded to the circling portions of the first and second segments into the first and second halves; and
at a final assembly site, fastening the first and second halves of each support by the bolts and welding the first and second segments with the first and second halves fastened by the bolts.

2. The method according to claim 1, wherein at the preliminary assembly site, the first and second segments are disposed into a tubular casing that encloses the auger.

3. The method according to claim 2, wherein in aligning the centers of the first and second segments, a distance from an inner circumferential surface of the casing to the outer circumferential surface of the circling portion of the first segment and a distance from the inner circumferential surface of the casing to the outer circumferential surface of the circling portion of the second segment are made equal.

4. The method according to claim 2 or 3, wherein
the casing includes a maintenance cover constituting a part of the casing, and
in arranging the first and second segments at the preliminary assembly site, the maintenance cover of the casing is removed to form an opening in the casing, and a dividing plane between the first and second segments is placed inside the opening.

5. The method according to any one of claims 1 to 4, wherein at the final assembly site, the first and second segments are disposed into a tubular casing that encloses the auger.

6. The method according to claim 5, wherein
the casing includes a maintenance cover constituting a part of the casing, and
in fastening the first and second halves of each support at the final assembly site, the maintenance cover of the casing is removed to form an opening in the casing, and a dividing plane between the first and second segments is placed inside the opening.
